# EUROPEAN PATENT SPECIFICATION

(11) **EP 2 087 419 B1**
(45) Date of publication and mention of the grant of the patent: **21.09.2016**
(21) Application number: 07863943.2
(22) Date of filing: 06.11.2007
(51) Int. Cl.: H04L 12/46, H04L 12/715, H04L 12/723

(54) **SUPPORTING BGP BASED IP-VPN IN A ROUTED NETWORK**
UNTERSTÜTZUNG VON BGP-BASIERTEM IP-VPN IN EINEM GEROUTETEN NETZ
SUPPORT DE VPN-IP BASÉ SUR BGP DANS UN RÉSEAU ROUTÉ

(30) Priority: 21.11.2006 US 866703 P
(43) Date of publication of application: 12.08.2009
(73) Proprietor: Avaya Inc., New Jersey 07920 (US)
(72) Inventor: ANUMALA, Mohnish, Littleton, MA 01460 (US); LAPUH, Roger, 8524 Uesslingen, Thurgau (CH); UNBEHAGEN, Paul E., Apex, NC 27523 (US)
(74) Representative: Williams, David John
(86) International application number: PCT/US2007/083716
(87) International publication number: WO 2008/063858

(56) References cited:
- WO-A1-2009/086931
- US-A1- 2003 108 041
- US-A1- 2005 190 757
- US-A1- 2006 171 404
- US-A1- 2006 198 368
- US-A1- 2006 233 181
- US-B1- 7 185 107
- MARK TOWNSLEY CISCO SYSTEMS TED SEELY SPRINT W: "BGP/MPLS IP VPNs over Layer 2 Tunneling Protocol ver 3; draft-townsley-l3vpn-l2tpv3-01.txt", IETF STANDARD-WORKING-DRAFT, INTERNET ENGINEERING TASK FORCE, IETF, CH, no. 1, 1 January 2004 (2004-01-01), XP015039778, ISSN: 0000-0004
- PRADOSH MOHAPATRA CISCO SYSTEMS ET AL: "BGP Information SAFI and BGP Tunnel Encapsulation Attribute; draft-pmohapat-idr-info-safi-00.txt", IETF STANDARD-WORKING-DRAFT, INTERNET ENGINEERING TASK FORCE, IETF, CH, 1 September 2006 (2006-09-01), XP015048448, ISSN: 0000-0004
- ROSEN CISCO SYSTEMS E ET AL: "BGP/MPLS IP Virtual Private Networks (VPNs); rfc4364.txt", IETF STANDARD, INTERNET ENGINEERING TASK FORCE, IETF, CH, 1 February 2006 (2006-02-01), XP015044797, ISSN: 0000-0003

## Description

### Field of the Invention

This invention relates generally to the field of network communications, and more particularly to BGP based IP-VPNs which do not require MPLS and explicit tunnel set-up.

### Background of the Invention

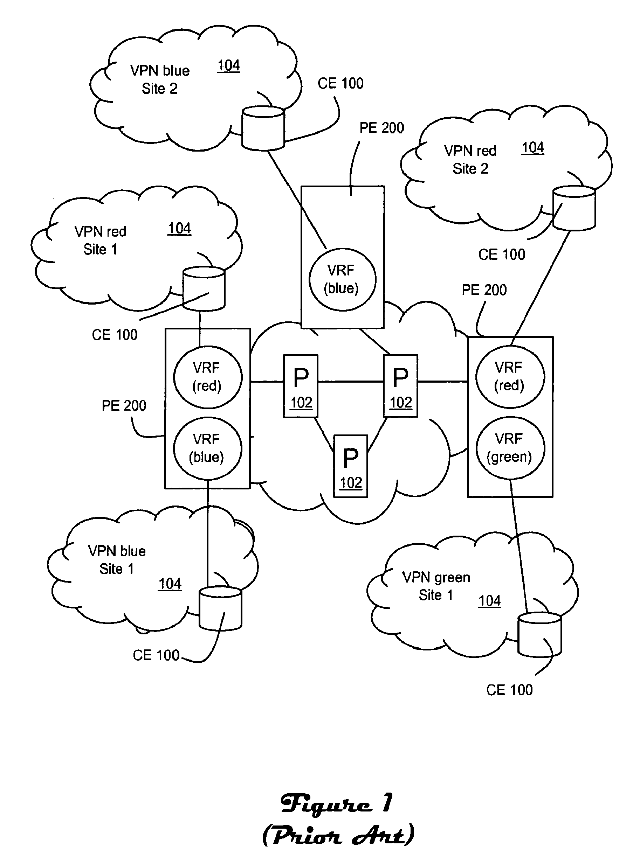

Figure 1 illustrates an Internet Protocol Virtual Private Network (IP-VPN) architecture. The architecture includes a plurality of VPN Sites, each of which includes a set of devices such as routers which share IP connectivity. Customer Edge (CE) devices (100) place VPN sites (104) in communication with Provider Edge (PE) devices (200), thereby allowing the VPN sites to communicate with other VPN sites (which belong to the same VPN) via the PE devices. The PE devices also allow remote access to other VPNs which are locally supported by the PE device. The PE devices track VPN routing information learned both locally and remotely. In MPLS networks, the PE devices also function as Label Edge Routers (LERs) which terminate Label Switched Path (LSP) tunnels used to forward traffic between PE devices. Provider (P) devices (102) are backbone routers which provides connectivity between PE devices. The Provider devices are not directly connected to any CE device and have no knowledge of VPN routes.

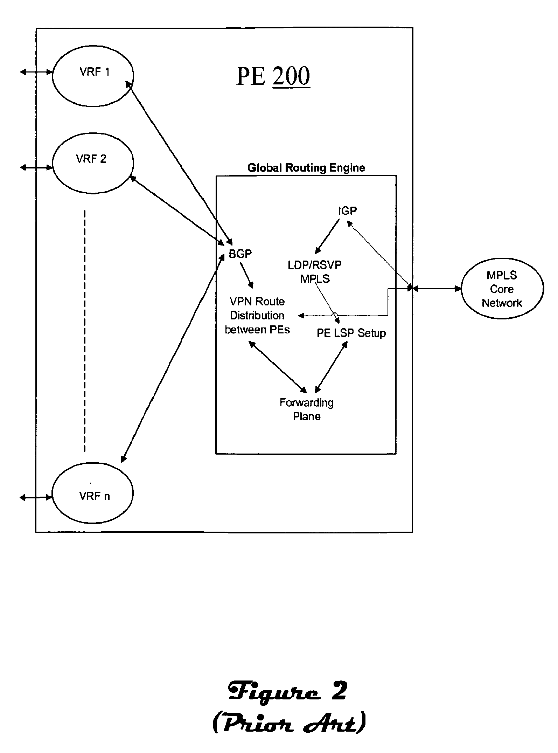

Figure 2 is a block diagram of a typical prior art PE device (200) capable of IP-VPN operation. The prior art PE device has five major functional blocks: an IGP protocol (e.g., OSPF, IBGP etc.) across the core network connecting the remote PE devices; Virtual Route Forwarders (VRFs) for customer traffic separation; an MPLS subsystem for Label Switched Path (LSP) setup and maintenance; BGP with multi-protocol extensions (MP-iBGP) to exchange VPN routes and service labels with the remote PE devices; and an IP-VPN Forwarding plane to encapsulate the customer IP packet with two or more MPLS labels. The Virtual Route Forwarders (VRFs) provide traffic isolation between customers operating over the same node. A virtual router emulates the behavior of a dedicated hardware router by providing separate routing functionality, and is treated by the network as a separate logical router. Each VRF is capable of routing traffic among the IP interfaces directly connected to it without MPLS encapsulation. The IP-VPN block allows the interconnection of VRFs in several different PE devices and data traffic between the PEs. The MPLS subsystem is responsible for establishing, deleting, and maintaining label switched path (LSP) tunnels between PE routers using LDP or RSVP-TE. PE routers use BGP to distribute VPN routes to each other. Each VPN is allowed to have its own address space, which means that the same address can be used in any number of VPNs, wherein each VPN the address denotes a different system. If two sites of a VPN attach to PE routers, which are in the same Autonomous System, the PE routers can distribute VPN-IPv4 routes to each other by means of an IBGP connection between them. Alternatively, each can have an MP-BGP connection to a route reflector. Routes are learned from the core network and provided to LDP. LDP sets up LSPs with the PE devices connected to core network. Alternatively RSVP (with TE extensions) can be used to set up LSPs between PE devices. Local VRFs learn routes from CE devices and export them to BGP. BGP distributes these VPN routes along with the assigned service labels to other PE devices. BGP learns the VPN routes from other PE devices and distributes them to local VRFs. BGP will support multi-protocol extensions, route distinguisher, and route targets to achieve this. Using the service label that BGP learned for a VPN route and the LSP set up by the MPLS signaling protocol to the remote PE device, PE device software will create a tunnel in the data-path for the CE packets that need to reach the remote VRF. The PE device will perform a VPN route lookup upon receiving a packet from the CE device. If the result of the lookup is the remote VRF, then packets will be tunneled to the destination PE device. Typically, the PE router will encapsulate a packet from a CE device with two MPLS labels - a tunnel (outer) label is used for reaching the destined PE device, and a service (inner) label is used for VPN identification at the destination PE.

PE devices (200) are used successfully with MPLS core networks with IP-VPN architectures such as illustrated in Figure 1 by large communications service providers. However, other large organizations in need of IP-VPN services in their own networks do not always favor MPLS core network solutions. For example, some large enterprises and universities have existing networks based on "pure IP," and prefer to avoid migration to an MPLS core network because of the cost of acquiring new equipment and expertise. Further, some communications service providers may have need of an IP-VPN architecture with an IP core.

One technique for achieving an "IP core" IP-VPN is to implement GRE-IP tunnels between the PE routers, encapsulate the MPLS labeled packets with GRE-IP headers, and tunnel the packets across the routed core network. This technique has been proposed in the IETF draft: *"Use of PE-PE GRE or IP in BGP*/*MPLS IP Virtual Private Networks draft-ietf-l3vpn-gre-ip-2547-*05." However, the technique requires MPLS equipment and expertise because MPLS is used to identify a VPN route, and an MPLS label stack is added to the VPN packets (between the ingress and egress PE router, the outermost member of the label stack will represent the VPN route label). Further, an MPLS-in-GRE or MPLS-in-IP encapsulation is used to convert the MPLS packet back into an IP packet (which creates a GRE or an IP tunnel between the ingress PE router and the egress PE router). This GRE-IP tunnel based solution has the complexity of a full mesh of GRE tunnels between PE devices. Further, because network complexity tends to increase and GRE tunnels are stateless, network convergence time may increase in the case of failure. Another technique, described in RFC4364, requires MPLS service and tunnel label encapsulation, including a label stack in the NLRI field. An alternative solution without the same drawbacks and requirements would be desirable.

The following documents taken from IEFT Standard-Working-Draft, Internet Engineering Task Force, IETF, CH are acknowledged.

BGP/MPLS IP WNs over Layer 2 Tunneling Protocol ver 3, XP 015039778 ISSN 0000-0004 discloses a variation of BGP/MPLS IP WNs in which the outermost MPLS label of a WN packet is replaced with an L2TPv3 encapsulation.

BGP Information SAFI and BGP Tunnel Encapsulation Attribute, XP0 15048448 ISSN 0000-0004 specifies a new BGP SAFI, Information SAFI. A BGP update message of this SAFI contains an NLRI which uniquely identifies the BGP speaker that originated the update.

BGP/MPLS IP Virtual Private Networks XP015044797 ISSN 0000-0003 describes a method by which a Service Provider may use an IP backbone to provide IP Virtual Private Networks (VPNs) for its customers.

It is noted that US2003/108041 is concerned with problems associated with common sets of IP addresses being associated with VPNs of different organizations. The sharing of common addresses due to use of equipment from a particular supplier by both a carrier and various enterprises can lead to packets being misdirected due to configuration errors. The solution is to use multiple addresses (customer/private and carrier/public) and a static address resolution protocol ARP table, but this lacks any address dedicated to the IP virtual private network or even the virtual route forwarder because it explicitly allows the same IP addresses to be used in both public and private networks for different devices.

### Summary

In accordance with one embodiment of the invention, apparatus for providing virtual private network service in a routed network comprises: a first edge router comprising: a plurality of virtual route forwarders including at least one source virtual route forwarder, each virtual route forwarder having a service IP address comprising an IP address which uniquely identifies that virtual route forwarder in the routed network; a protocol engine configured to exchange routes and service IP addresses with a second edge router which has a plurality of virtual route forwarders including at least one destination virtual route forwarder, each virtual route forwarder having a service IP address comprising an IP address which uniquely identifies that virtual route forwarder in the routed network, the exchanged service IP addresses including the service IP addresses associated with the source virtual route forwarder; and a forwarding plane configured to encapsulate a received protocol data unit with a service header, the service header including the service IP address associated with the source virtual route forwarder and the service IP address _associated with the destination virtual route forwarder, and to transmit the encapsulated protocol data unit to the destination virtual route forwarder of the second edge router, the routed network routing the encapsulated protocol data unit using the service IP addresses without using MPLS and explicit tunnel set-up.

In accordance with another embodiment of the invention, provided is a method of providing virtual private network service in a device of a routed network, the routed network having a first edge router comprising a plurality of virtual route forwarders including at least one source virtual route forwarder, each virtual route forwarder having a service IP address comprising an IP address which uniquely identifies that virtual route forwarder in the routed network, the method comprising: exchanging routes and service IP addresses with a second edge router which has a plurality of virtual route forwarders including at least one destination virtual route forwarder, each virtual route forwarder having a service IP address comprising an IP address which uniquely identifies that virtual route forwarder in the routed network, the exchanged service IP addresses including service IP addresses associated with the source virtual route forwarder; encapsulating a received protocol data unit with a service header, the service header including the service IP address associated with the source virtual route forwarder and the service IP address associated with the destination virtual route forwarder; and transmitting the encapsulated protocol data unit from the source virtual route forwarder to the destination virtual route forwarder, the routed network routing the protocol data unit without using MPLS and explicit tunnel set-up.

Various advantages are provided by particular embodiments of the invention. For example, MPLS and its signaling protocols (LDP, RSVP-TE) are not required. Further, the forwarding plane will encapsulate the customer IP packet with a service IP header and forward the packet to egress PE. In contrast, RFC4364 requires MPLS service and tunnel label encapsulation. Further, interpretation of MP-REACH-NLRI and MP-UNREACH-NLRI is different; the prior art IPVPN requires a label stack in the NLRI field, while the invention can use the service IP address (service IP address assigned to a VRF in the egress PE) as the next-hop address. A route distinguisher can be used as the Service IP address. Particular distinctions and advantages also exist with regard to draft-ietf-l3vpn-gre-ip-2547-05. The draft-ietf-l3vpn-gre-ip-2547-05 requires provisioning of GRE tunnels between PE devices, and may actually require a full mesh of GRE-IP tunnels between PE devices. In contrast, the invention does not require tunnel setup. The *draft-ietf-l3vpn-gre-ip-2547-*05 requires MPLS and its signaling protocols in implementing the IPVPN. In contrast, the invention doesn't require MPLS. Because GRE tunnels are stateless, network convergence time may increase in the case of failure using *draft-ietf-l3vpn-gre-ip-2547-0.* IGP will handle failures in the routed core network in particular embodiments of the invention. Further, particular embodiments of the invention are capable of plug-n-play operation, whereas the *draft-ietf-l3vpn-gre-ip-2547-05* is not.

### Brief Description of the Figures

Figure 1 illustrates a prior art IP-VPN architecture.
Figure 2 illustrates a prior art provider edge (PE) device.
Figure 3 illustrates a BGP-based IP-VPN architecture.
Figure 4 illustrates a Provider Edge (PE) device that supports operation of the architecture of Figure 3.
Figures 5 and 6 illustrate packet format for the architecture of Figure 3.
Figure 7 illustrates an alternative embodiment of the architecture of Figure 3.

### Detailed Description

The terms "Customer Edge" and "Provider Edge" are used in this document to describe particular devices in a network architecture because those terms have become conventional in the art, and will thus facilitate description of embodiments of the invention and appreciation of the distinctions relative to the prior art. However, the terms are not intended to be limiting in any way, and particularly do not imply that a customer or provider will necessarily control and use the devices. Indeed, one advantage of the invention is that a single organization can implement a BGP-based IP-VPN by using the Customer Edge (CE) devices, Provider Edge (PE) devices and Provider Routers described below.

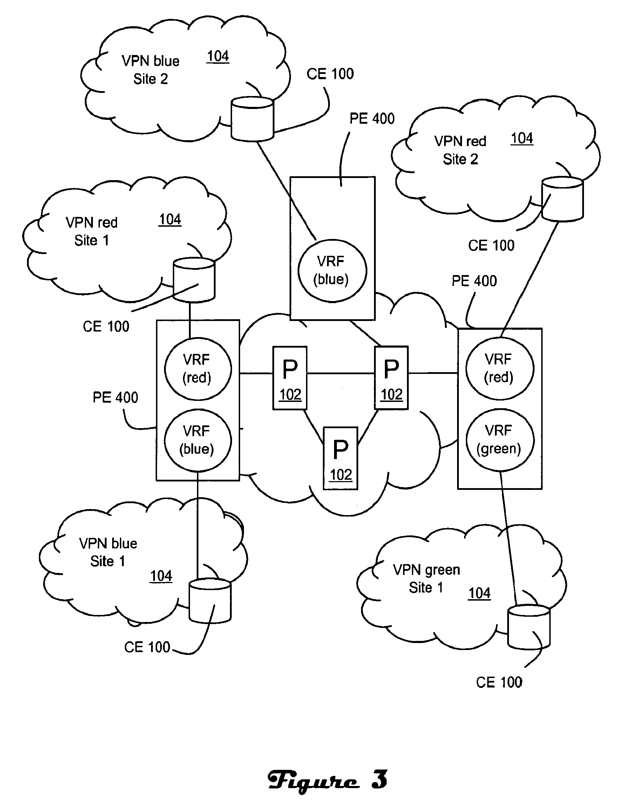

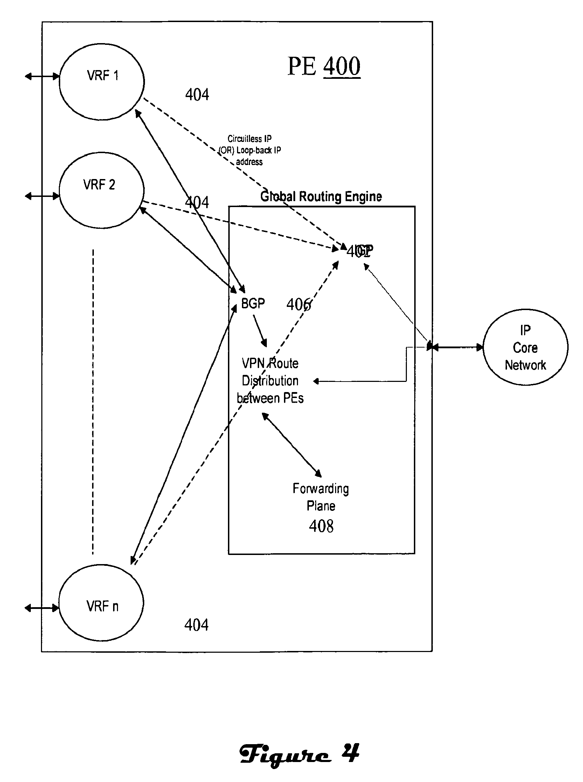

Referring to Figures 3 and 4, a BGP based IP-VPN architecture implemented with at least two IP-VPN capable Provider Edge (PE) devices (400) does not require MPLS and explicit tunnel set-up. The PE device (400) has four major function engines: IGP protocol (402) (e.g., OSPF, IBGP, etc.) across the core network connecting the remote PE devices; Virtual Route Forwarders (VRFs) (404) for customer traffic separation; BGP (406) with multi-protocol extensions (MP-iBGP) to exchange VPN routes and service IP address with the remote PE devices; and an IPVPN forwarding plane (408) to encapsulate the customer IP packet into a service IP header. There is no need for an MPLS subsystem because the forwarding plane (408) utilizes the service IP header rather than MPLS labels, and MP-iBGP exchanges service IP addresses with VPN routes rather than service labels. Each VRF in a PE device dedicates an IP address to the IP-VPN. In order to distinguish that dedicated IP address from other IP addresses in this description, the dedicated IP address is referred to as the "service IP address." One implementation of the service IP address is a loop-back IP address. The service IP address should be unique in the core network, and should not be used for "regular" or protocol traffic of the VRF, although variants in which service IP addresses are also used for regular, protocol traffic are deemed to be within the scope of the invention. Each VRF exports its service IP address to the IGP protocol running in the global routing engine on the local PE device. IGP distributes service-IP addresses such that devices connected to the core network can reach the VRFs associated with the service-IP addresses. If one service IP address is used per VRF, then the forwarding element in the PE device is able to find the destination VRF for a packet by executing a lookup of the service destination IP address. The PE then forwards the packet in the VRF using the destination IP address in the customer IP header to support traffic flow from the core to the edge.

In an alternative embodiment a circuit-less IP address is used as the service IP address for each VRF next-hop, i.e., multiple service IP addresses per VRF. In this embodiment the destination PE device performs a lookup on the destination service IP address, and performs packet processing based on the result, thereby improving performance by eliminating the need for a lookup on the customer destination IP. However, this alternative embodiment may require more service addresses per VRF.

As shown below, the service IP header includes the remote VRF service IP address in the destination IP address field, and the local VRF service IP address in the source IP address field. The protocol type can be IP in IP (4) or GRE (47).

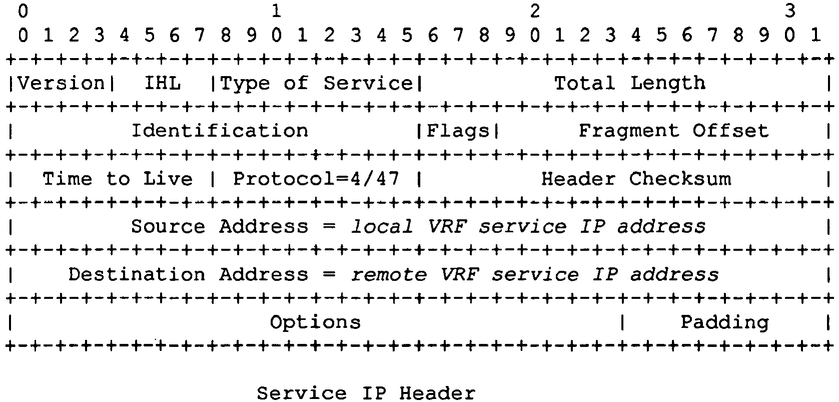

BGP-4 capability may be augmented so that PE devices can exchange the ability to use the service IP addresses as the next-hop address in the VPN route exchange.

MP-iBGP or MP-eBGP is utilized for VPN route distribution. In particular, MP-iBGP uses the service IP address of the corresponding local VRF as the next-hop address in its update message. The BGP update message format need not be modified. Several techniques may be employed to cause the BGP speaker to inform peers of the service IP address as the next-hop. Modifying the BGP update message format is not necessarily required. A first technique is to use the next-hop field in MP-REACH-NLRI, MP-UNREACH-NLRI to advertise the service IP address. This technique utilizes an update message for each individual VRF. A second technique is to store the first 12-bits of the service IP address in the next-hop field and the other 20-bits in the service label location of the MP-REACH-NLRI, MP-UNREACH-NLRI. In a third technique the RD value of the VRF is created using the service IP address as the IP address in the Type 1 format of Route Distinguisher (RD). The service label is kept empty in the MP-REACH-NLRI, MP-UNREACH-NLRI. A fourth technique is to create a new format for MP-REACH-NLRI. Regardless of the route distribution technique, when the MP-BGP peer receives the VPN route, it stores the VPN route and service IP address (of the remote VRF) in the BGP RIB-IN. The peer then runs its route selection process and updates its local RIB. If the VPN route is selected to program the switch forwarding plane, then a service IP header is constructed with the next-hop address in the BGP update message as the destination IP address and this is programmed into VPN FIB. The VPN route is also associated with the service IP header in the forwarding plane. The four route distribution techniques will now be described and illustrated in greater detail.

In accordance with the first technique for BGP Route distribution, the service label is left unused in MP-REACH-NLRI, MP-UNREACH-NLRI. The format of the MP-REACH-NLRI used by the Ingress PE is shown below. The next-hop address in the BGP update will have the service IP address. There will not be a service label in the MP-REACH-NLRI.

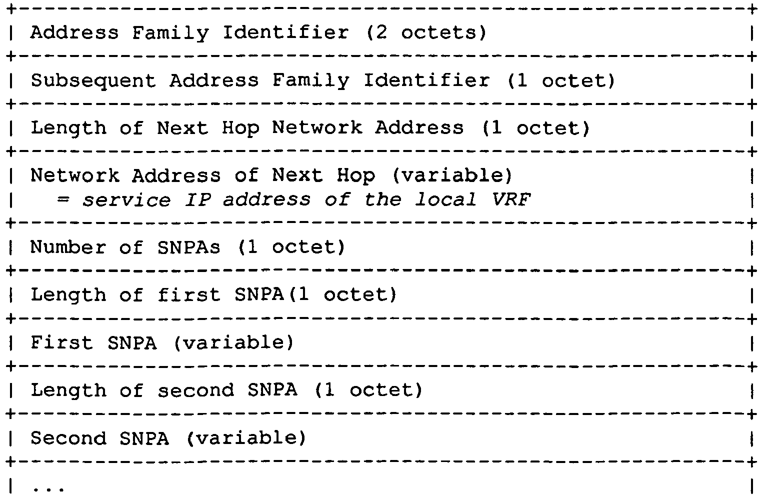

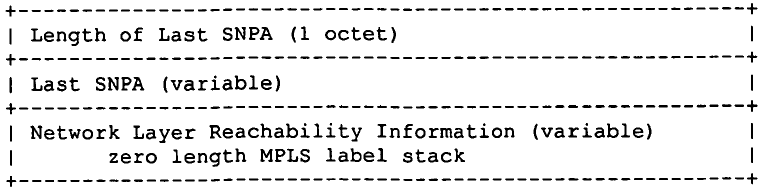

This may require that the BGP update message is limited to a single VRF source because the next-hop address is the Service IP address, which belongs to a single VRF. As a consequence, many BGP updates may be required if the PE has many VRFs. However, the format of the MP-REACH-NLRI, MP-UNREACH-NLRI is preserved.

In accordance with the second method for BGP Route distribution, the first 12-bits of the service IP address are stored in the next-hop field and the remaining 20-bits are stored in the service label location of the MP-REACH-NLRI, MP-UNREACH-NLRI. However, it should be understood that the total number of bits, and their distribution, is a design choice that may vary within the scope of the invention. The format of the MP-REACH-NLRI used by the Ingress PE is depicted below.

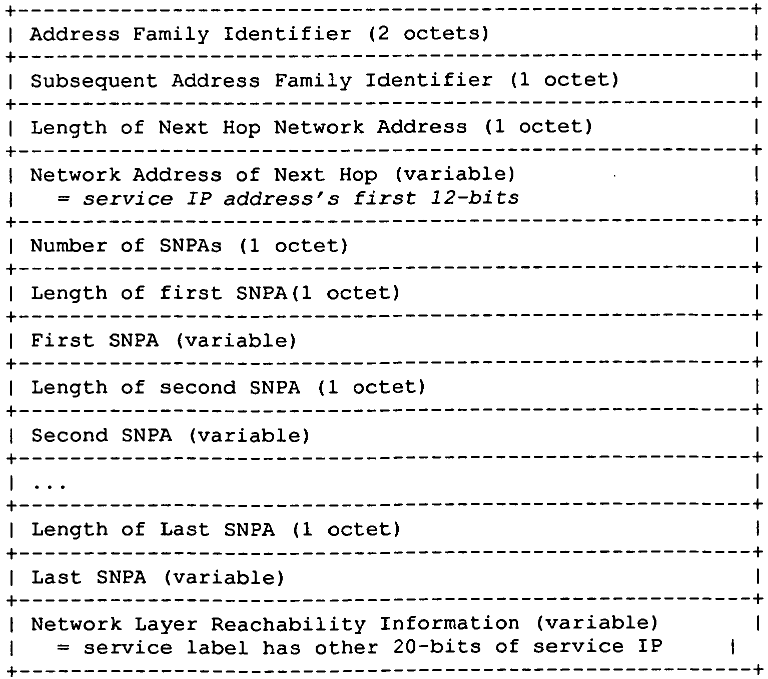

This technique permits a single BGP update message to carry all the VPN routes from a PE device (provided they fit in the update message). However, all service IP addresses in a single PE device should have the same first 3 nibbles (12 bits). Again, the format of the MP-REACH-NLRI, MP-UNREACH-NLRI is preserved.

In accordance with the third technique for BGP route distribution, the RD value of the VRF is created using the service IP address as the IP address in Type 1 format of RD. In this technique, only RD of Type 1 is supported. The Service label is kept empty in the MP-REACH-NLRI, MP-UNREACH-NLRI. The Type 1 format is as follows: an administration field contains a 4 byte ipv4 address and an assigned number field contains a 2 byte number assigned by the service provider. It is recommended to use a globally unique unicast address such as the PEs router ID or an interface address. For example, for an IP address of 24.24.1.1 and an assigned number of 3, the RD would be 24.24.1.1:3. The format of the MP-REACH-NLRI used by the Ingress PE is depicted below.

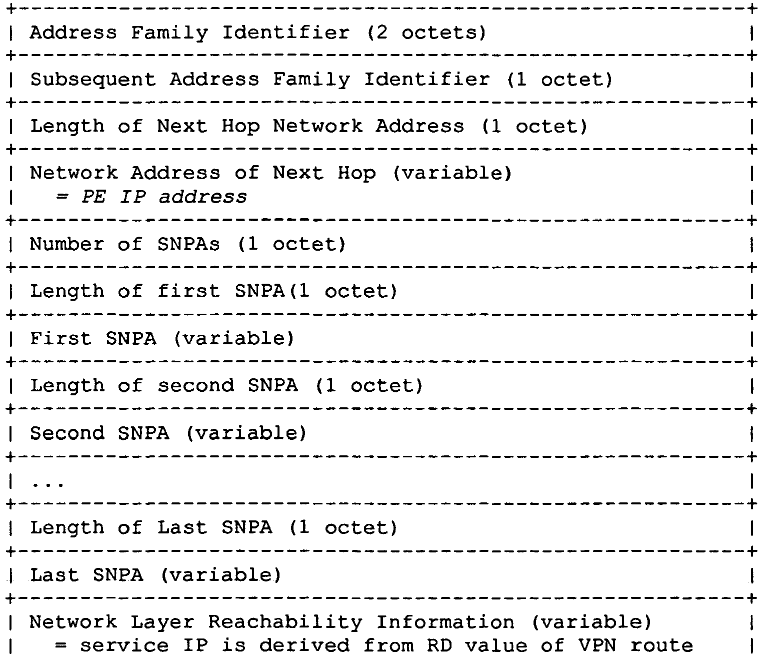

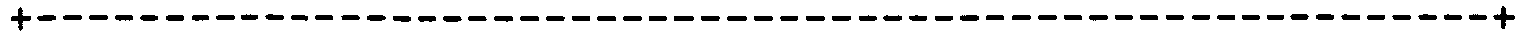

Again, the format of the MP-REACH-NLRI, MP-UNREACH-NLRI is preserved.

In accordance with the fourth technique for BGP route distribution, the MP-REACH-NLRI, MP-UNREACH-NLRI is modified to accommodate the service IP address in addition to service label by introducing a type field in NLRI. The format of the MP-REACH-NLRI depicted below is merely an example, and should not be interpreted as the only implementation within the scope of the invention.

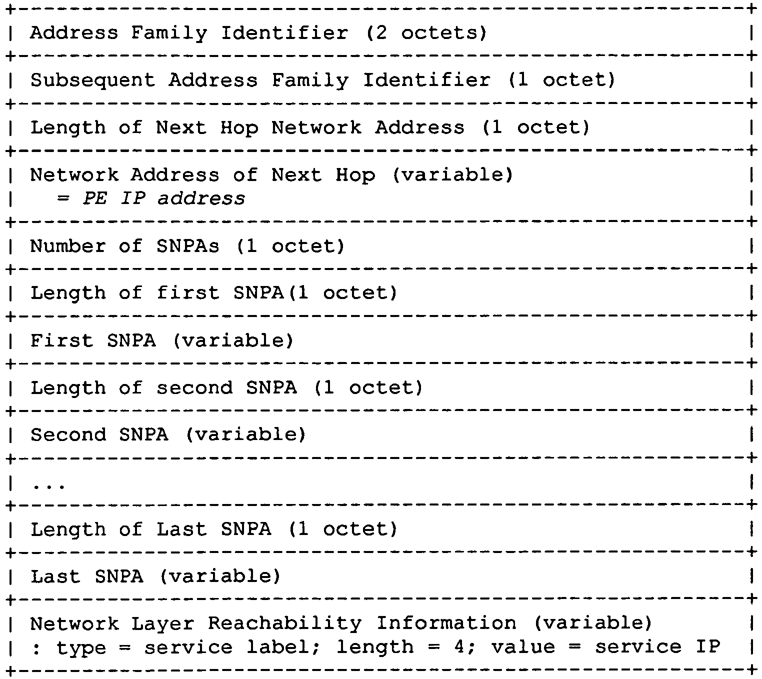

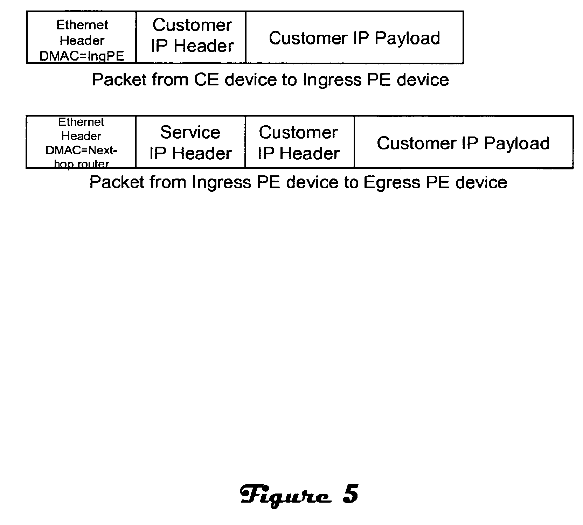

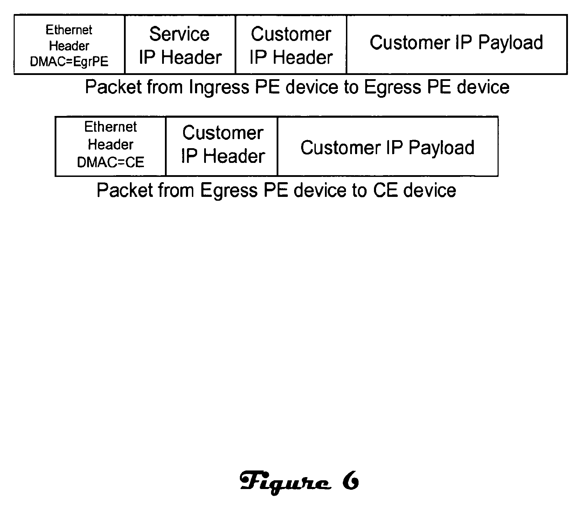

VPN packet forwarding will now be described with reference to Figures 3 through 6. When the VRF forwarding plane receives a packet from a CE device, it performs a lookup on the VPN route. The result of the lookup operation is the above-described VPN route's associated service IP header. The VRF forwarding plane encapsulates the CE IP packet with this service IP header and forwards the packet to the (routed core network) next-hop router of the destination IP address of the service IP header. When the destination PE device receives this IP packet, it performs a lookup on the destination IP address of the service IP header. The result of the lookup operation is that the destination PE device associates the destination IP address of the service IP header with its local VRF. It will de-capsulate (remove) the service IP header and perform a lookup on the destination IP address of the customer IP header within the associated VRF FIB. Thus, it will forward the packet appropriately in the VRF to the destined CE device.

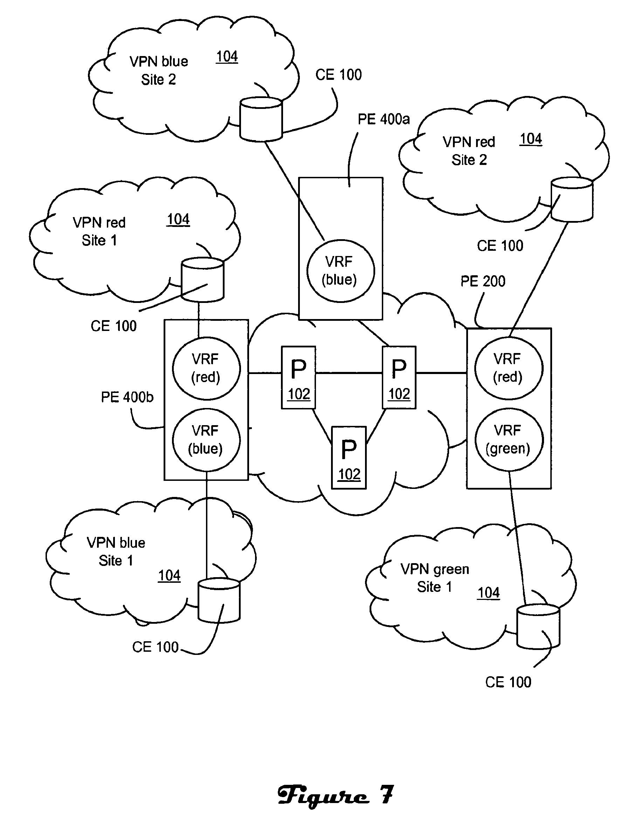

Interoperability of the BGP-based IP-VPN PE devices described above with prior art PE devices is depicted in Figure 7. PE (200) is a prior art PE device and the PE (400a, 400b) devices operate as described above. PE (400b) will advertise service IP addresses to PE (400a) and a service label to PE (200) for the same VPN route advertisement from MP-iBGP running on PE (400b). PE (400a) and PE (400b) agree on using the service IP addresses, PE (400b) and PE (200) agree on using service labels during the BGP capability exchange. However, PE (400b) and PE (200) won't be able to exchange VPN routes because they won't be able to agree on the capability.

While the invention is described through the above exemplary embodiments, it will be understood by those of ordinary skill in the art that modification to and variation of the illustrated embodiments may be made without departing from the inventive concepts herein disclosed. Moreover, while the preferred embodiments are described in connection with various illustrative structures, one skilled in the art will recognize that the system may be embodied using a variety of specific structures. Accordingly, the invention should not be viewed as limited except by the scope of the appended claims.

## Claims

1. Apparatus adapted to provide virtual private network service in a routed network, comprising:
a first edge router (400) comprising: a plurality of virtual route forwarders (404) including at least one source virtual route forwarder (404), each virtual route forwarder (404) having a service IP address comprising an IP address which uniquely identifies that virtual route forwarder (404) in the routed network;
a protocol engine (406) configured to exchange routes and service IP addresses with a second edge router (400) which has a plurality of virtual route forwarders (404) including at least one destination virtual route forwarder (404), each virtual route forwarder (404) having a service IP address comprising an IP address which uniquely identifies that virtual route forwarder (404) in the routed network, the exchanged service IP addresses including the service IP addresses associated with the source virtual route forwarder (404); and
a forwarding plane (408) configured to encapsulate a received protocol data unit with a service header, the service header including the service IP address associated with the source virtual route forwarder (404) and the service IP address _associated with the destination virtual route forwarder (404), and to transmit the encapsulated protocol data unit to the destination virtual route forwarder (404) of the second edge router (400), the routed network routing the encapsulated protocol data unit using the service IP addresses without using MPLS and explicit tunnel set-up.

2. The apparatus of claim 1 wherein the service IP address of the source virtual route forwarder (404) is a loop-back IP address or an interface or a regular IP address.

3. The apparatus of claim 1 or claim 2 wherein the protocol engine is configured to transmit an update message which includes the service IP address dedicated to the source virtual route forwarder as a next-hop address.

4. The apparatus of claim 3 wherein
a next-hop field in "MP-REACH-NLRI", "MP-UNREACH-NLRI" of the Border Gateway Protocol "BGP" is used to advertise the service IP address; and/or
the update message is transmitted for each virtual route forwarder by the protocol engine; and/or
a first portion of the service IP address is stored in a next-hop field and a second portion is stored in a service label location of "MP-REACH-NLRI", "MP-UNREACH-NLRI" of the BGP.

5. The apparatus of claim 3 or claim 4 wherein a BGP Route Distinguisher "RD" value of the source virtual route forwarder is created using the service IP address as the IP address in a route distinguisher field.

6. The apparatus of claim 3, claim 4 or claim 5 wherein the protocol engine is configured to utilize a modified "MP-REACH-NLRI" of the BGP.

7. The apparatus of any preceding claim wherein the first edge router stores the service IP address of the destination virtual route forwarder, and associates a Virtual Private Network "VPN" route with the service header in memory for subsequent lookup.

8. A method of providing virtual private network service in a device of a routed network, the routed network having a first edge router (400) comprising a plurality of virtual route forwarders (404) including at least one source virtual route forwarder (404), each virtual route forwarder having a service IP address comprising an IP address which uniquely identifies that virtual route forwarder in the routed network, the method comprising:
exchanging routes and service IP addresses with a second edge router (400) which has a plurality of virtual route forwarders (404) including at least one destination virtual route forwarder (404), each virtual route forwarder having a service IP address comprising an IP address which uniquely identifies that virtual route forwarder in the routed network, the exchanged service IP addresses including service IP addresses associated with the source virtual route forwarder (404);
encapsulating a received protocol data unit with a service header, the service header including the service IP address associated with the source virtual route forwarder and the service IP address associated with the destination virtual route forwarder; and
transmitting the encapsulated protocol data unit from the source virtual route forwarder to the destination virtual route forwarder, the routed network routing the protocol data unit without using MPLS and explicit tunnel set-up.

9. The method of claim 8 wherein the service IP address of the source virtual route forwarder is a loop-back IP address or an interface or a regular IP address.

10. The method of claim 8 or claim 9 including the further step of transmitting an update message which includes the service IP address dedicated to the source virtual route forwarder as a next-hop address.

11. The method of claim 10 including
the further step of using a next-hop field in "MP-REACH-NLRI", "MP-UNREACH-NLRI" of the Border Gateway Protocol "BGP" associated with the update message to advertise the service IP address; and/or
the further step of transmitting a separate update message for each virtual route forwarder; and/or
the further step of storing a first portion of the service IP address in a next-hop field and storing a second portion in a service label location of "MP-REACH-NLRI", "MP-UNREACH-NLRI" of the BGP.

12. The method of claim 10 or claim 11 including the further step of creating a BGP Route Distinguisher "RD" value of the source virtual route forwarder using the service IP address as the IP address in a route distinguisher field associated with the update message.

13. The method of any one of claims 10 to 12 including the further step of utilizing a modified "MP-REACH-NLRI" of the BGP.

14. The method of any one of claims 8 to 13 wherein the first edge router stores the service IP address of the destination virtual route forwarder, and associates a VPN route with the service header in memory for subsequent lookup.

## Patentansprüche

1. Vorrichtung, die dafür ausgelegt ist, einen virtuellen privaten Netzwerkdienst in einem gerouteten Netzwerk bereitzustellen, wobei die Vorrichtung Folgendes umfasst:
einen ersten Edge-Router (400), der Folgendes umfasst: eine Vielzahl von virtuellen Routing-Weiterleitern (404), die mindestens einen einzelnen virtuellen Quell-Routing-Weiterleiter (404) umfassen, wobei jeder virtuelle Routing-Weiterleiter (404) eine Dienst-IP-Adresse aufweist, die eine IP-Adresse umfasst, die diesen virtuellen Routing-Weiterleiter (404) in dem gerouteten Netzwerk eindeutig identifiziert;
eine Protokollmaschine (406), die dafür konfiguriert ist, Routen und Dienst-IP-Adressen mit einem zweiten Edge-Router (400) auszutauschen, der eine Vielzahl von virtuellen Routing-Weiterleitern (404) aufweist, die mindestens einen einzelnen virtuellen Ziel-Routing-Weiterleiter (404) umfassen, wobei jeder virtuelle Routing-Weiterleiter (404) eine Dienst-IP-Adresse aufweist, die eine IP-Adresse umfasst, die diesen virtuellen Routing-Weiterleiter (404) in dem gerouteten Netzwerk eindeutig identifiziert, wobei die ausgetauschten Dienst-IP-Adressen die Dienst-IP-Adressen umfassen, die dem virtuellen Quell-Routing-Weiterleiter (404) zugeordnet sind; und
eine Weiterleitungsebene (408), die für Folgendes konfiguriert ist: Verkapseln einer empfangenen Protokolldateneinheit mit einem Dienstkopfdatensatz, wobei der Dienstkopfdatensatz Folgendes umfasst: die Dienst-IP-Adresse, die dem virtuellen Quell-Routing-Weiterleiter (404) zugeordnet ist, und die Dienst-IP-Adresse, die dem virtuellen Ziel-Routing-Weiterleiter (404) zugeordnet ist, und Senden der verkapselten Protokolldateneinheit zu dem virtuellen Ziel-Routing-Weiterleiter (404) des zweiten Edge-Routers (400), wobei das geroutete Netzwerk die verkapselte Protokolldateneinheit unter Verwendung der Dienst-IP-Adressen weiterleitet, ohne MPLS und eine explizite Tunneleinrichtung zu verwenden.

2. Vorrichtung nach Anspruch 1, wobei die Dienst-IP-Adresse des virtuellen Quell-Routing-Weiterleiters (404) eine Rückschleifen-IP-Adresse, eine Schnittstelle oder eine reguläre IP-Adresse ist.

3. Vorrichtung nach Anspruch 1 oder Anspruch 2, wobei die Protokollmaschine dafür konfiguriert ist, eine Aktualisierungsnachricht zu senden, die die Dienst-IP-Adresse umfasst, die dem virtuellen Quell-Routing-Weiterleiter als Adresse des nächsten Sprungs gewidmet ist.

4. Vorrichtung nach Anspruch 3, wobei
ein Feld des nächsten Sprungs in "MP-REACH-NLRI", "MP-UNREACH-NLRI" des Border-Gateway-Protokolls "BGP" dazu verwendet wird, die Dienst-IP-Adresse zu veröffentlichen; und/oder
die Aktualisierungsnachricht für jeden virtuellen Routing-Weiterleiter durch die Protokollmaschine gesendet wird; und/oder
ein erster Abschnitt der Dienst-IP-Adresse in einem Feld des nächsten Sprungs gespeichert wird und ein zweiter Abschnitt in einer Dienstetikettposition von "MP-REACH-NLRI", "MP-UNREACH-NLRI" des BGP gespeichert wird.

5. Vorrichtung nach Anspruch 3 oder Anspruch 4, wobei ein BGP-Routingunterscheidungswert "RD-Wert" des virtuellen Quell-Routing-Weiterleiters unter Verwendung der Dienst-IP-Adresse als IP-Adresse in einem Routingunterscheidungsfeld erzeugt wird.

6. Vorrichtung nach Anspruch 3, Anspruch 4 oder Anspruch 5, wobei die Protokollmaschine dafür konfiguriert ist, einen modifizierten "MP-REACH-NLRI" des BGP zu nutzen.

7. Vorrichtung nach einem der vorhergehenden Ansprüche, wobei der erste Edge-Router die Dienst-IP-Adresse des virtuellen Ziel-Routing-Weiterleiters speichert und eine Route eines virtuellen privaten Netzwerks "VPN" dem Dienstkopfdatensatz im Speicher für spätere Nachschlagvorgänge zuordnet.

8. Verfahren zum Bereitstellen eines virtuellen privaten Netzwerkdienstes in einer Vorrichtung eines gerouteten Netzwerks, wobei das geroutete Netzwerk einen ersten Edge-Router (400) aufweist, der Folgendes umfasst: eine Vielzahl von virtuellen Routing-Weiterleitern (404), die mindestens einen einzelnen virtuellen Quell-Routing-Weiterleiter (404) umfassen, wobei jeder virtuelle Routing-Weiterleiter eine Dienst-IP-Adresse aufweist, die eine IP-Adresse umfasst, die diesen virtuellen Routing-Weiterleiter in dem gerouteten Netzwerk eindeutig identifiziert, wobei das Verfahren Folgendes umfasst:
Austauschen von Routen und Dienst-IP-Adressen mit einem zweiten Edge-Router (400), der eine Vielzahl von virtuellen Routing-Weiterleitern (404) aufweist, die mindestens einen einzelnen virtuellen Ziel-Routing-Weiterleiter (404) umfassen, wobei jeder virtuelle Routing-Weiterleiter eine Dienst-IP-Adresse aufweist, die eine IP-Adresse umfasst, die diesen virtuellen Routing-Weiterleiter in dem gerouteten Netzwerk eindeutig identifiziert, wobei die ausgetauschten Dienst-IP-Adressen Dienst-IP-Adressen umfassen, die dem virtuellen Quell-Routing-Weiterleiter (404) zugeordnet sind;
Verkapseln einer empfangenen Protokolldateneinheit mit einem Dienstkopfdatensatz, wobei der Dienstkopfdatensatz Folgendes umfasst: die Dienst-IP-Adresse, die dem virtuellen Quell-Routing-Weiterleiter zugeordnet ist, und die Dienst-IP-Adresse, die dem virtuellen Ziel-Routing-Weiterleiter zugeordnet ist, und
Senden der verkapselten Protokolldateneinheit von dem virtuellen Quell-Routing-Weiterleiter zu dem virtuellen Ziel-Routing-Weiterleiter, wobei das geroutete Netzwerk die Protokolldateneinheit weiterleitet, ohne MPLS und eine explizite Tunneleinrichtung zu verwenden.

9. Verfahren nach Anspruch 8, wobei die Dienst-IP-Adresse des virtuellen Quell-Routing-Weiterleiters eine Rückschleifen-IP-Adresse, eine Schnittstelle oder eine reguläre IP-Adresse ist.

10. Verfahren nach Anspruch 8 oder Anspruch 9, das den weiteren Schritt des Sendens einer Aktualisierungsnachricht umfasst, die die Dienst-IP-Adresse umfasst, die dem virtuellen Quell-Routing-Weiterleiter als Adresse des nächsten Sprungs gewidmet ist.

11. Verfahren nach Anspruch 10, das Folgendes umfasst:
den weiteren Schritt des Verwendens eines Felds des nächsten Sprungs in "MP-REACH-NLRI", "MP-UNREACH-NLRI" des Border-Gateway-Protokolls "BGP", das der Aktualisierungsnachricht zugeordnet ist, um die Dienst-IP-Adresse zu veröffentlichen; und/oder
den weiteren Schritt des Sendens einer separaten Aktualisierungsnachricht für jeden virtuellen Routing-Weiterleiter; und/oder
den weiteren Schritt des Speicherns eines ersten Abschnitts der Dienst-IP-Adresse in einem Feld des nächsten Sprungs und des Speicherns eines zweiten Abschnitts in einer Dienstetikettposition von "MP-REACH-NLRI", "MP-UNREACH-NLRI" des BGP.

12. Verfahren nach Anspruch 10 oder Anspruch 11, das folgenden weiteren Schritt umfasst: Erzeugen eines BGP-Routingunterscheidungswerts "RD-Wert" des virtuellen Quell-Routing-Weiterleiters unter Verwendung der Dienst-IP-Adresse als IP-Adresse in einem Routingunterscheidungsfeld, das der Aktualisierungsnachricht zugeordnet ist.

13. Verfahren nach einem der Ansprüche 10 bis 12, das den weiteren Schritt des Verwendens eines modifizierten "MP-REACH-NLRI" des BGP umfasst.

14. Verfahren nach einem der Ansprüche 8 bis 13, wobei der erste Edge-Router die Dienst-IP-Adresse des virtuellen Ziel-Routing-Weiterleiters speichert und eine Route eines VPN dem Dienstkopfdatensatz im Speicher für spätere Nachschlagvorgänge zuordnet.

## Revendications

1. Appareil conçu pour assurer un service de réseau privé virtuel dans un réseau routé, comprenant :
un premier routeur de périphérie (400) comprenant : une pluralité de dispositifs de transfert de route virtuelle (404) incluant au moins un dispositif de transfert de route virtuelle source (404), chaque dispositif de transfert de route virtuelle (404) ayant une adresse IP de service comprenant une adresse IP qui identifie sans équivoque ce dispositif de transfert de route virtuelle (404) dans le réseau routé ;
un moteur de protocole (406) configuré pour échanger des routes et adresses IP de service avec un deuxième routeur de périphérie (400) lequel a une pluralité de dispositifs de transfert de route virtuelle (404) incluant au moins un dispositif de transfert de route virtuelle destination (404), chaque dispositif de transfert de route virtuelle (404) ayant une adresse IP de service comprenant une adresse IP laquelle identifie sans équivoque ce dispositif de transfert de route virtuelle (404) dans le réseau routé ; les adresses IP de service échangées comprenant les adresses IP de service associées au dispositif de transfert de route virtuelle source (404) ; et
un plan de transfert (408) configuré pour encapsuler une unité de données de protocole reçue avec un en-tête de service, l'en-tête de service incluant l'adresse IP de service associée au dispositif de transfert de route virtuelle source (404) et l'adresse IP de service associée au dispositif de transfert de route virtuelle destination (404), et pour transmettre l'unité de données de protocole encapsulée au dispositif de transfert de route virtuelle destination (404) du deuxième routeur de périphérie (400), le réseau routé routant l'unité de données de protocole encapsulée en utilisant les adresses IP de service sans employer de configuration MPLS (commutation multi-protocole par étiquette) et tunnel explicite.

2. Appareil selon la revendication 1, dans lequel l'adresse IP de service du dispositif de transfert de route virtuelle source (404) est une adresse IP de bouclage ou une interface ou une adresse IP normale.

3. Appareil selon la revendication 1 ou revendication 2, dans lequel le moteur de protocole est configuré pour transmettre un message de mise à jour qui comprend l'adresse IP de service dédiée au dispositif de transfert de route virtuelle source comme adresse de saut suivant.

4. Appareil selon la revendication 3 dans lequel,
un champ de saut suivant dans "MP-REACH-NLRI", "MP-UNREACH-NLRI" du protocole BGP (Border Gateway Protocol) est utilisé pour communiquer l'adresse IP de service ; et/ou
le message de mise à jour est transmis pour chaque dispositif de transfert de route virtuelle par le moteur de protocole ; et/ou
une première partie de l'adresse IP de service est enregistrée dans un champ de saut suivant et une deuxième partie est enregistrée dans un emplacement d'étiquette de service de "MP-REACH-NLRI", "MP-UNREACH-NLRI" du BGP.

5. Appareil selon la revendication 3 ou revendication 4, dans lequel une valeur "RD" de dispositif de distinction de route BGP du dispositif de transfert de route virtuelle source est créée en utilisant l'adresse IP de service comme l'adresse IP dans un champ de dispositif de distinction de route.

6. Appareil selon la revendication 3, 4 ou 5, dans lequel le moteur de protocole est configuré pour utiliser un "MP-REACH-NLRI" modifié du BGP.

7. Appareil selon l'une quelconque des revendications précédentes, dans lequel le premier routeur de périphérie enregistre l'adresse IP de service du dispositif de transfert de route virtuelle destination, et associe une route de Réseau Privé Virtuel (VPN) à l'en-tête de service en mémoire en vue de recherches ultérieures.

8. Procédé de réalisation d'un service de réseau privé virtuel dans un dispositif d'un réseau routé, le réseau routé ayant un premier routeur de périphérie (400) comprenant une pluralité de dispositifs de transfert de route virtuelle (404) incluant au moins un dispositif de transfert de route virtuelle source (404), chaque dispositif de transfert de route virtuelle ayant une adresse IP de service comprenant une adresse IP qui identifie sans équivoque ce dispositif de transfert de route virtuelle dans le réseau routé, le procédé consistant à :
échanger des routes et des adresses IP de service avec un deuxième routeur de périphérie (400) lequel a une pluralité de dispositifs de transfert de route virtuelle (404) incluant au moins un dispositif de transfert de route virtuelle destination (404), chaque dispositif de transfert de route virtuelle ayant une adresse IP de service comprenant une adresse IP qui identifie sans équivoque ce dispositif de transfert de route virtuelle dans le réseau routé, les adresses IP de service échangées comprenant des adresses IP de service associées au dispositif de transfert de route virtuelle source (404) ;
encapsuler une unité de données de protocole reçue avec un en-tête de service, l'en-tête de service incluant l'adresse IP de service associée au dispositif de transfert de route virtuelle source et l'adresse IP de service associée au dispositif de transfert de route virtuelle destination ; et
transmettre l'unité de données de protocole encapsulée du dispositif de transfert de route virtuelle source au dispositif de transfert de route virtuelle destination, le réseau routé routant l'unité de données de protocole sans employer de configuration MPLS (commutation multi-protocole par étiquette) et tunnel explicite.

9. Procédé selon la revendication 8, dans lequel l'adresse IP de service du dispositif de transfert de route virtuelle source est une adresse IP de bouclage ou une interface ou une adresse IP normale.

10. Procédé de la revendication 8 ou 9, comprenant l'étape supplémentaire consistant à transmettre un message de mise à jour qui inclut l'adresse IP de service dédiée au dispositif de transfert de route virtuelle source comme adresse de saut suivant.

11. Procédé selon la revendication 10 comprenant
l'étape supplémentaire consistant à utiliser un champ de saut suivant dans "MP-REACH-NLRI", "MP-UNREACH-NLRI" du protocole BGP (Border Gateway Protocol) associé au message de mise à jour pour communiquer l'adresse IP de service ; et/ou
l'étape supplémentaire consistant à transmettre un message de mise à jour séparé pour chaque dispositif de transfert de route virtuelle ; et/ou
l'étape supplémentaire consistant à enregistrer une première partie de l'adresse IP de service dans un champ de saut suivant et à enregistrer une deuxième partie dans un emplacement d'étiquette de service de "MP-REACH-NLRI", "MP-UNREACH-NLRI" du BGP.

12. Procédé de la revendication 10 ou 11, comprenant l'étape supplémentaire consistant à créer une valeur "RD" de dispositif de distinction de route BGP du dispositif de transfert de route virtuelle source en utilisant l'adresse IP de service comme l'adresse IP dans un champ de dispositif de distinction de route avec le message de mise à jour.

13. Procédé selon l'une quelconque des revendications 10 à 12, comprenant l'étape supplémentaire consistant à utiliser un "MP-REACH-NLRI" modifié du BGP.

14. Procédé selon l'une quelconque des revendications 8 à 13, dans lequel le premier routeur de périphérie enregistre l'adresse IP de service du dispositif de transfert de route virtuelle destination, et associe une route VPN (réseau privé virtuel) à l'en-tête de service en mémoire pour une recherche ultérieure.
